# EUROPÄISCHE PATENTSCHRIFT

(11) **EP 1 785 297 B1**
(45) Veröffentlichungstag und Bekanntmachung des Hinweises auf die Patenterteilung: **09.07.2008**
(21) Anmeldenummer: 06017371.3
(22) Anmeldetag: 21.08.2006
(51) Int. Cl.: B60H 1/22

(54) **Einrichtung zum Konditionieren von in einem Fahrzeuginnenraum einzuleitender Luft**
Device for conditioning the air to be introduced in a vehicle interior
Appareil de conditionnement de l'air destiné à un habitacle de véhicule

(30) Priorität: 14.11.2005 DE 102005054196
(43) Veröffentlichungstag der Anmeldung: 16.05.2007
(73) Patentinhaber: J. Eberspächer GmbH & Co. KG, 73730 Esslingen (DE)
(72) Erfinder: Collmer, Andreas, 73773 Aichwald (DE); Schmidt, Oliver, 73207 Plochingen (DE)
(74) Vertreter: Ruttensperger, Bernhard

(56) Entgegenhaltungen:
- DE-A1- 10 211 591
- DE-A1-4102005 053 51
- US-A- 3 301 248

## Beschreibung

Die vorliegende Erfindung betrifft eine Einrichtung zum Konditionieren von in einen Fahrzeuginnenraum einzuleitender Luft, umfassend ein Luftführungsgehäuse und ein Heizgerät mit einer Brenneranordnung und einer Wärmetauscheranordnung, wobei die Wärmetauscheranordnung einen langgestreckten, in dem Luftführungsgehäuse sich im Wesentlichen quer zur Luftströmungsrichtung erstreckenden Wärmetauscherkörper aufweist, wobei der Wärmetauscherkörper in seinem von der Brenneranordnung entfernt liegenden ersten Endbereich einen ersten Lagerungsbereich aufweist, wobei an einer Gehäusewandung des Luftführungsgehäuses ein erster Gegen-Lagerungsbereich vorgesehen ist.

Eine derartige Einrichtung ist beispielsweise aus der gattungsgemäße DE 102 11 591 A1 bekannt. Der Wärmetauscherkörper bzw. das die Wärmetauscheranordnung und die Brenneranordnung umfassende Heizgerät ist in oder nahe seinen beiden Endbereichen an jeweiligen Gehäusewandungen des Luftführungsgehäuses fest abgestützt. In seinem von der Brenneranordnung entfernt liegenden Enbereich ist dazu der Wärmetauscherkörper mit einem Dorn versehen, der in eine Aufnahme an einer Gehäusewandung des Luftführungsgehäuses eingreift. Auf diese Art und Weise ist das Heizgerät bzw. der Wärmetauscherkörper an seinen beiden Längsenden fest mit der Gehäuseanordnung verbunden.

Es ist die Aufgabe der vorliegenden Erfindung, eine Einrichtung zur Konditionierung von in einen Fahrzeuginnenraum einzuleitender Luft vorzusehen, bei welcher bei verbessertem Betriebsverhalten eine Entlastung verschiedener Systembereiche erlangt wird.

Erfindungsgemäß wird diese Aufgabe gelöst durch eine Einrichtung zum Konditionieren von in einen Fahrzeuginnenraum einzuleitender Luft, umfassend ein Luftführungsgehäuse und ein Heizgerät mit einer Brenneranordnung und einer Wärmetauscheranordnung, wobei die Wärmetauscheranordnung einen langgestreckten, in dem Luftführungsgehäuse sich im Wesentlichen quer zur Luftströmungsrichtung erstreckenden Wärmetauscherkörper aufweist, wobei der Wärmetauscherkörper in seinem von der Brenneranordnung entfernt liegenden ersten Endbereich einen ersten Lagerungsbereich aufweist, wobei an einer Gehäusewandung des Luftführungsgehäuses ein erster Gegen-Lagerungsbereich vorgesehen ist und wobei der Wärmetauscherkörper mit seinem ersten Lagerungsbereich vermittels eines ersten Lagerungselements in einer eine Relativbewegung bezüglich des ersten Gegen-Lagerungsbereichs in Richtung der Längserstreckung des Wärmetauscherkörpers zulassenden Weise an dem ersten Gegen-Lagerungsbereich abgestützt ist.

Bei der erfindungsgemäßen Einrichtung ist also der Wärmetauscherkörper an dem Luftführungsgehäuse in zumindest einem seiner Längsenden nicht festgehalten, wie dies beim Stand der Technik der Fall ist, sondern es ist eine flexible Halterungswirkung erzielt, die eine Relativbewegbarkeit zwischen dem Gehäuse und dem Wärmetauscherkörper insbesondere in Richtung von dessen Längserstreckung zulässt. Dies ist insbesondere hinsichtlich der im Betrieb und bei Erwärmung des Wärmetauscherkörpers auftretenden thermischen Expansion bzw. Kontraktion von besonderem Vorteil, da auf diese Art und Weise Verspannungen oder Zwängungen in den aneinander festgelegten Bereichen vermieden werden können. Auch kann auf diese Weise ein Ausgleich von Fertigungstoleranzen erfolgen.

Als besonders vorteilhafte Weitergestaltungsmöglichkeit kann dann vorgesehen sein, dass das erste Lagerungselement elastisch ist und eine am ersten Lagerungsbereich abgestützte erste Lagerungsfläche sowie eine am ersten Gegen-Lagerungsbereich abgestützte zweite Lagerungsfläche aufweist. Durch die Elastizität des ersten Lagerungselements ist in Verbindung mit der zugelassenen Relativbewegung zwischen dem Wärmetauscherkörper und dem ersten Gegen-Lagerungsbereich auch eine im Betrieb auftretende Schwingungen dämpfende Verbindung realisiert. Dies entlastet nicht nur die so verbundenen Bauteile, sondern vermeidet insbesondere auch das Entstehen von ungewünschten Klapper- oder Kratzgeräuschen. Ferner kann insbesondere durch den Einsatz eines derartigen elastischen ersten Lagerungselementes bei geeigneter Materialauswahl auch eine thermische Entkopplung zwischen dem Wärmetauscherkörper und dem Luftführungsgehäuse erzielt werden.

Um eine stabile, gleichwohl die gewünschte Bewegung jedoch zulassende Verbindung bzw. Abstützung zu realisieren, wird vorgeschlagen, dass ein Lagerungsbereich von erstem Lagerungsbereich und zweitem Lagerungsbereich eine Lagerungsaussparung aufweist, in welche der andere Lagerungsbereich vom ersten Lagerungsbereich und zweitem Lagerungsbereich als Lagerungsvorsprung eingreift, wobei vorzugsweise weiterhin vorgesehen ist, dass das erste Lagerungselement im Wesentlichen ringartig ausgebildet ist und dass die dem einen Lagerungsbereich zugeordnete Lagerungsfläche von erster Lagerungsfläche und zweiter Lagerungsfläche eine Außenumfangsfläche ist und an einer Innenumfangsfläche der Lagerungsaussparung anliegt und dass die dem anderen Lagerungsbereich zugeordnete Lagerungsfläche von erster Lagerungsfläche und zweiter Lagerungsfläche eine Innenumfangsfläche ist und an einer Außenumfangsfläche des Lagerungsvorsprungs anliegt.

Um bei derartiger Ausgestaltung eine Verschiebung des ersten Lagerungselements, möglicherweise hervorgerufen durch Vibrationen bzw. Relativbewegungen, vermeiden zu können, wird vorgeschlagen, dass an dem ersten Lagerungsbereich oder/und dem ersten Gegen-Lagerungsbereich ein die Bewegung des ersten Lagerungselements in Richtung der Längserstreckung des Wärmetauscherkörpers begrenzender Anlagebereich vorgesehen ist.

Bei einer besonders vorteilhaften Ausgestaltungsvariante wird vorgeschlagen, dass der Lagerungsvorsprung in Richtung auf sein Ende zu sich verjüngend ausgebildet ist. Wenn dabei weiterhin vorgesehen ist, dass die Lagerungsaussparung in Richtung auf einen Aussparungboden zu sich verjüngend ausgebildet ist, liegen hier einander im Wesentlichen komplementäre Formen gegenüber, die insbesondere auch in Verbindung mit einem elastischen ersten Lagerungselement ein besonders vorteilhaftes Abstützverhalten zur Folge haben.

Bei der erfindungsgemäßen Einrichtung wird weiter vorgeschlagen, dass der Wärmetauscherkörper in seinem ersten Endbereich eine Bodenwandung aufweist, an welcher der erste Lagerungsbereich vorgesehen ist.

Das Vorhandensein einer derartigen Bodenwandung kann dann beispielsweise für einen derartigen Aufbau genutzt werden, bei dem der erste Lagerungsbereich den von der Bodenwandung sich erstreckenden Lagerungsvorsprung umfasst. Alternativ ist es möglich, dass die Bodenwandung eine die Lagerungsaussparung bereitstellende Einsenkung aufweist.

Wenn weiterhin vorgesehen ist, dass an die Bodenwandung eine Wärmeübertragungsrippen tragende Umfangswandung anschließt, wird die im Allgemeinen vorteilhafte, grundsätzlich topfartige Formgebung des Wärmetauscherkörpers erzielt.

In Verbindung mit einer derartigen Gesamtform des Wärmetauscherkörpers kann dann vorgesehen sein, dass die Umfangswandung sich über die Bodenwandung hinaus erstreckt und den Lagerungsvorsprung wenigstens in einem Teilbereich seiner Erstreckung umgibt. Auf diese Art und Weise kann praktisch über die gesamte Erstreckunglänge des Wärmetauscherkörpers dieser effektiv zur Wärmeübertragung auf die im Luftführungsgehäuse strömende Luft genutzt werden, da auch der Bereich, in welchem der Lagerungsvorsprung sich erstreckt, mit Wärmeübertragungsrippen versehen sein kann. Besonders vorteilhaft ist es dabei, wenn die Umfangswandung sich über das Ende des Lagerungsvorsprungs hinaus erstreckt.

Bei einer alternativen Ausgestaltungsform kann ein entsprechender Effekt dadurch erzielt werden, dass die in der Bodenwandung vorgesehene Einsenkung von der Umfangswandung umgeben ist.

Eine weitere alternative Ausgestaltungsform sieht zum effizienten Ausnutzen der Gesamtlänge des Wärmetauscherkörpers beispielsweise vor, dass der Wärmetauscherkörper eine Wärmeübertragungsrippen tragende Umfangswandung und in seinem ersten Endbereich eine an diese anschließende Bodenwandung aufweist, wobei die Umfangswandung zur Bereitstellung der Lagerungsaussparung sich in Richtung der Längserstreckung des Wärmetauscherkörpers über die Bodenwandung hinaus erstreckt.

Da bei dem erfindungsgemäßen Aufbau einer Einrichtung zur Konditionierung von in einen Fahrzeuginnenraum einzuleitender Luft in dem angesprochenen ersten Endbereich des Wärmetauscherkörpers für eine Flexibilität in der Anbindung gesorgt ist, kann zur stabileren Verbindung zwischen dem Wärmetauscher bzw. einem diesen aufweisenden Heizgerät und dem Luftführungsgehäuse weiter vorgesehen sein, dass der Wärmetauscherkörper in seinem der Brenneranordnung nahe liegenden zweiten Endbereich einen zweiten Lagerungsbereich aufweist, der an einem zweiten Gegen-Lagerungsbereich an einer Gehäusewandung des Luftführungsgehäuses vermittels eines zweiten Lagerungselements in Richtung der Längserstreckung des Wärmetauscherkörpers und quer dazu im Wesentlichen nicht bewegbar abgestützt ist.

Hier ist vorzugsweise das zweite Lagerungselement elastisch, so dass nicht nur eine Abdichtungswirkung, sondern auch eine Schwingungs- und Geräuschentkopplungsfunktion eingeführt ist und auch eine thermische Entkopplung realisiert ist.

Die vorliegende Erfindung wird nachfolgend mit Bezug auf die beiliegenden Zeichnungen anhand bevorzugter Ausgestaltungsbeispiele detailliert beschrieben. Es zeigt:
- Fig. 1: eine Teil-Schnittansicht einer Einrichtung zum Konditionieren von in einen Fahrzeuginnenraum einzuleitender Luft;
- Fig. 2: eine Detailansicht einer alternativen Ausgestaltungsart der in Fig. 1 gezeigten Einrichtung;
- Fig. 3: eine Detailansicht einer alternativen Ausgestaltungsart der in Fig. 1 gezeigten Einrichtung;
- Fig. 4: eine Detailansicht einer alternativen Ausgestaltungsart der in Fig. 1 gezeigten Einrichtung.

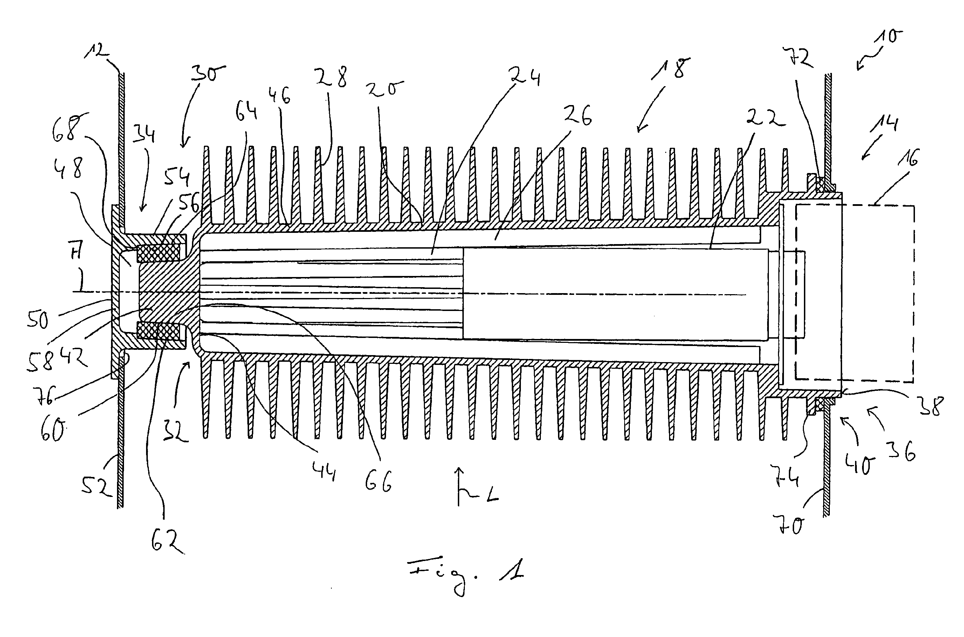

In Fig. 1 ist ein Ausschnitt einer Einrichtung 10 zum Konditionieren von in einen Fahrzeuginnenraum einzuleitender Luft dargestellt. Diese Einrichtung umfasst ein Luftführungsgehäuse 12. Dieses beispielsweise kastenartig ausgestaltete Luftführungsgehäuse trägt in dem in Fig. 1 dargestellten Bereich ein Heizgerät 14, durch welches auf die im Luftführungsgehäuse 12 strömende Luft Wärme übertragen werden kann. Das hinsichtlich seiner wesentlichen Systembereiche dargestellte Heizgerät 14 umfasst eine strichliert angedeutete Brenneranordnung 16, in welcher ein Gemisch aus Luft und Brennstoff bzw. Brennstoffdampf verbrannt wird. Um die dabei entstehende Wärme auf die in den Fahrzeuginnenraum einzuleitende Luft übertragen zu können, ist die Brenneranordnung mit einer Wärmetauscheranordnung 18 verbunden. Diese umfasst einen in Richtung einer Längsachse A langgestreckten Wärmetauscherkörper 20, und die die Brenneranordnung 16 über ein Flammrohr 22 verlassenden Verbrennungsabgase treten in den im Wärmetauscherkörper 20 gebildeten Innenraum 24 ein. An der Innenoberfläche des Wärmetauscherkörpers 20 sind Wärmeübertragungsrippen 26 vorgesehen, die sich näherungsweise in der Längserstreckungsrichtung A erstrecken und die Wärmeaufnahmeoberfläche an der Innenseite vergrößern. An der Außenseite des Wärmetauscherkörpers 20 sind ebenfalls Wärmeübertragungsrippen 28 vorgesehen. Diese liegen näherungsweise parallel zur Luftströmungsrichtung L im Bereich des Heizgeräts 14, so dass die das Luftführungsgehäuse 12 in der Richtung L durchströmende Luft näherungsweise parallel über die Oberfläche der Wärmeübertragungsrippen 28 strömt und von diesen Wärme aufnimmt. Es sei hier darauf hingewiesen, dass die Wärmeübertragungsrippen 28 mit dem Wärmetauscherkörper 20 integral ausgebildet sein können, an dessen Außenoberfläche aber auch als separate Bauteile festgelegt sein können.

In seinem von der Brenneranordnung 16 entfernt liegenden ersten Endbereich 30 weist der Wärmetauscherkörper 20 einen ersten Lagerungsbereich 32 auf, der an einem ersten Gegen-Lagerungsbereich 34 am Luftführungsgehäuse 12 in nachfolgend noch beschriebener Art und Weise abgestützt ist. In seinem der Brenneranordnung 16 nahe liegenden zweiten Endbereich 36 weist der Wärmetauscherkörper 20 einen zweiten Lagerungsbereich 38, beispielsweise in Form eines zylindrischen Abschnitts auf, der an einem zweiten Gegen-Lagerungsbereich 40 des Luftführungsgehäuses 12 abgestützt ist. Auch diese Art der Abstützung wird nachfolgend noch detaillierter erläutert.

Man erkennt in Fig. 1, dass der erste Lagerungsbereich am ersten Endbereich des Wärmetauscherkörpers 20 einen in der Richtung der Längsachse A sich erstreckenden Lagerungsvorsprung 42 umfasst. Dieser erstreckt sich von einer Bodenwandung 44 des Wärmetauscherkörpers 20, die am axialen Ende einer die Wärmeübertragungsrippen 28 tragenden Umfangswandung 44 mit dieser integral ausgebildet ist bzw. in diese übergeht. Der von dieser Bodenwandung 44 sich also erstreckende Lagerungsvorsprung 42 des ersten Lagerungsbereichs 32 ist in eine Lagerungsaussparung 48 des zweiten Lagerungsbereichs 34 eingeführt. Dieser zweite Lagerungsbereich 34 ist in der in Fig. 1 dargestellten Ausgestaltungsform an einem Einsatzteil 50 gebildet, das wiederum an einer Gehäusewandung 52 des Luftführungsgehäuses 12 festgelegt ist. Das Einsatzteil 50 weist einen die Lagerungsaussparung 48 umgebenden bzw. in Umfangsrichtung begrenzenden ringartigen Abschnitt 54 auf, der eine in Richtung auf einen Bodenbereich 58 zu sich verjüngende, also beispielsweise konisch sich verjüngende Innenoberfläche 56 aufweist. Entsprechend ist auch der Lagerungsvorsprung 42 sich in Richtung zu seinem Ende, also im zusammengesetzten Zustand auch in Richtung auf den Bodenbereich 58 zu verjüngend ausgebildet und weist eine entsprechende, beispielsweise konisch sich verjüngende Außenumfangsfläche 60 auf. Zwischen diese beiden Flächen 56 und 60 ist ein ringartiges erstes Lagerungselement 62 eingesetzt. Dieses liegt mit einer ersten Lagerungsfläche 64 an der Innenumfangsfläche 56 an und liegt entsprechend mit einer zweiten Lagerungsfläche 66 an der Außenoberfläche 60 an. Das erste Lagerungselement 62 kann beispielsweise eine ebenfalls grundsätzlich konische Formgebung aufweisen, kann jedoch auch durch bzw. beim Einsetzen in das Bauteil 50 in die konische Form gebracht werden.

Das erste Lagerungselement 62 ist aus elastischem Material, beispielsweise aus Gummi oder gummiartigem Material aufgebaut und ist so geformt und bemessen, dass es in dem in Fig. 1 dargestellten zusammengefügten Zustand unter einer gewissen Vorspannung an den beiden Oberflächen 56, 60 abgestützt ist. Auf diese Art und Weise ist der Wärmetauscherkörper 20 zwar in radialer Richtung bezogen auf die Längsachse A mit einer gewissen Schwingungen dämpfenden Elastizität abgestützt, gleichwohl kann der Endbereich 30 des Wärmetauscherkörpers 20 sich beispielsweise bei thermischer Expansion oder Kontraktion bezüglich des Bauteils 50, also des ersten Gegen-Lagerungsbereichs 34, bewegen. Zwängungen oder Verspannungen können auf diese Art und Weise vermieden werden. Um bei den möglicherweise auftretenden Relativbewegungen zu verhindern, dass das erste Lagerungselement 62 sich in ungewünschter Weise verschiebt, ist am Bauteil 50 eine Anlageschulter 68 vorgesehen. Diese verhindert eine Verschiebung des Lagerungselements 62 in Richtung auf den Bodenbereich 58 zu. Beispielsweise könnte auch der Bodenbereich 58 selbst einen derartigen Anlagebereich für das erste Lagerungselement 62 bereitstellen.

In seinem zweiten Endbereich 36 ist der Wärmetauscherkörper 20 an einer Gehäusewandung 70 des Luftführungsgehäuses 12 vorzugsweise sowohl in axialer Richtung, also in Richtung der Längsmittenachse A, als auch quer dazu fest abgestützt. Auch hierzu kann ein beispielsweise ringartiges zweites Lagerungselement 72 dienen, das im zweiten Lagerungsbereich 38 bzw. zweiten Gegen-Lagerungsbereich 40 zwischen der Gehäusewandung 70 und dem Wärmetauscherkörper 20 liegt. Hierzu kann beispielsweise an dem im Wesentlichen zylindrischen zweiten Lagerungsabschnitt 38 ein Radialflansch 74 vorgesehen sein, welcher unter Zwischenlagerung des zweiten Lagerungselements 72 gegen die Gehäusewandung 70 gepresst ist. Die fest Verbindung kann durch Schraub- oder Klemmwirkung erzielt werden.

Bei dem in Fig. 1 dargestellten Aufbau einer erfindungsgemäßen Einrichtung 10 ist also in einem Endbereich die Wärmetauscheranordnung 18 bzw. der Wärmetauscherkörper 20 bezüglich des Luftführungsgehäuses 12 sowohl in der Längserstreckungsrichtung des Wärmetauscherkörpers 20, als im Wesentlichen quer dazu festgelegt. Da diese Festlegung vorzugsweise unter Zwischenlagerung eines elastischen zweiten Lagerungselements 72 erfolgt, wird hier sowohl eine Schwingungsentkopplung als auch eine thermische Entkopplung realisiert. Dabei kann dieses zweite Lagerungselement 72 so geformt sein, dass es nicht nur in axialer Richtung, sondern auch in radialer Richtung eine Abstützwirkung entfaltet. Im anderen Endbereich, nämlich dem ersten Endbereich 30, ist der Wärmetauscherkörper 20 bezüglich des Luftführungsgehäuses 12 auch fest abgestützt, jedoch auch hier unter Zwischenschaltung eines elastischen ersten Lagerungselements 62. Auch dies sorgt für thermische Entkopplung und gewährleistet ebenfalls eine Schwingungsentkopplung in dem für Schwingungsanregungen besonders anfälligen ersten Endbereich 30 des Wärmetauscherkörpers 20. Gleichwohl ermöglicht der vorgesehene Eingriff eines Lagerungsvorsprungs 42 in eine zugeordnete Lagerungsaussparung 48 in Richtung der Längserstreckung des Wärmetauscherkörpers 20 eine Relativbewegbarkeit zwischen dem Wärmetauscherkörper 20 und der dort für Abstützung sorgenden Gehäusewandung 52.

Da bei dem in Fig. 1 dargestellten Aufbau der erste Gegen-Lagerungsbereich 34 am Luftfülorungsgehäuse 12 nicht integraler Bestandteil der Gehäusewandung 52 ist, sondern an dem an der Gehäusewandung 52 festzulegenden Bauteil 50 ausgebildet ist, lässt sich diese Anordnung besonders leicht zusammenfügen. Es kann nämlich zunächst der Wärmetauscherkörper 20 in das Luftführungsgehäuse 12 eingeführt werden und zwar so, dass er, wie in der Fig. 1 dargestellt, sich mit seiner Längserstreckungsrichtung bereits im Wesentlichen quer zu der dann vorgesehenen Luftströmungsrichtung L erstreckt. Er kann dann in seinem zweiten Endbereich 36 in die in Fig. 1 dargestellte Positionierung gebracht werden und dort an der Gehäusewandung 70 festgelegt werden. Daraufhin kann dann das Bauteil 50 mit seinem im Wesentlichen zylindrischen Abschnitt 54 durch eine zugeordnete Öffnung 76 in der Gehäusewandung 72 hindurchgeführt und somit mit dem beispielsweise auch bereits daran getragenen ersten Lagerungselement 62 auf den Lagerungsvorsprung 42 aufgeschoben werden. Der sich über den zylindrischen Abschnitt 54 hinaus erstreckende Bodenbereich 50 liegt dann an der Gehäusewandung 52 an, so dass nicht nur die Öffnung 76 strömungsdicht abgeschlossen wird, sondern das Bauteil 50 auch leicht an der Gehäusewandung 52 befestigt werden kann. Daraufhin kann dann wieder am zweiten Endbereich 36 die Brenneranordnung 16 mit der Wärmetauscheranordnung 18 kombiniert werden, d.h. von außen an diese angesetzt werden und daran festgelegt werden.

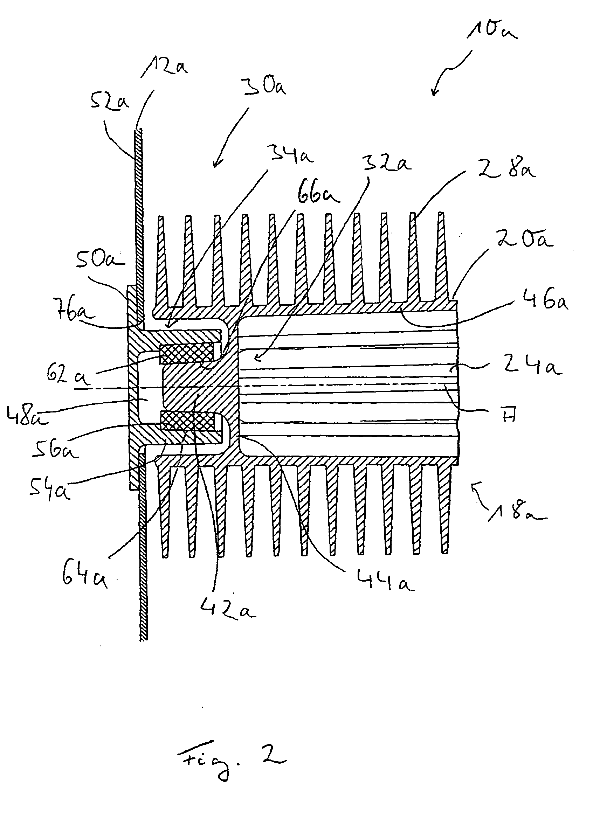

Eine alternative Ausgestaltungsform ist in Fig. 2 gezeigt. Die Fig. 2 zeigt dabei nur den dem ersten Endbereich 30a nahe liegenden Abschnitt des Wärmetauscherkörpers 20a mit den für die Erklärung wichtigen Komponenten. Für gleiche Komponenten bzw. Systembereiche werden die gleichen Bezugszeichen unter Hinzufügung des Anhangs "a" verwendet.

Man erkennt bei der in Fig. 2 dargestellten Ausgestaltungsvariante, dass, ebenso wie bei der vorangehend beschriebenen, der erste Lagerungsbereich 32a wieder den von der Bodenwandung 44a des Wärmetauscherkörpers 20a sich erstreckenden Lagerungsvorsprungs 42a umfasst. Die Umfangswandung 46a des Wärmetauscherkörpers 20a endet jedoch nicht im axialen Bereich der Bodenwandung 44a, sondern ist über diese hinaus verlängert und reicht bis nahe an die Gehäusewandung 52a des Luftführungsgehäuses 12a hinaus. Die Umfangswandung 46a bildet also einen Raum aus, in welchem der Lagerungsvorsprung 42a sich erstreckt, so dass im zusammengefügten Zustand nicht nur der Lagerungsvorsprung 42a von diesem Bereich der Umfangswandung 46a umgeben ist, sondern auch der im Wesentlichen zylindrische und das erste Lagerungselement 62a abstützende Abschnitt 54a des Bauteils 50a, also des ersten Gegen-Lagerungsbereichs 34a. Insbesondere dann, wenn, wie in Fig. 2 dargestellt, die Umfangswandung 46a sich dabei noch bis über das axiale Ende des Lagerungsvorsprungs 42a hinaus erstreckt und in diesem Bereich dann auch Wärmeübertragungsrippen 28a trägt, kann die gesamte axiale Länge des zwischen den beiden Gehäusewandungen 70a (in Fig. 1 dargestellt) und 52a sich erstreckenden Wärmetauscherkörpers 20a zur Übertragung von Wärme auf die diesen umströmende Luft genutzt werden. Es ist kein zur Wärmeübertragung nicht effektiver Strömungsraum vorhanden.

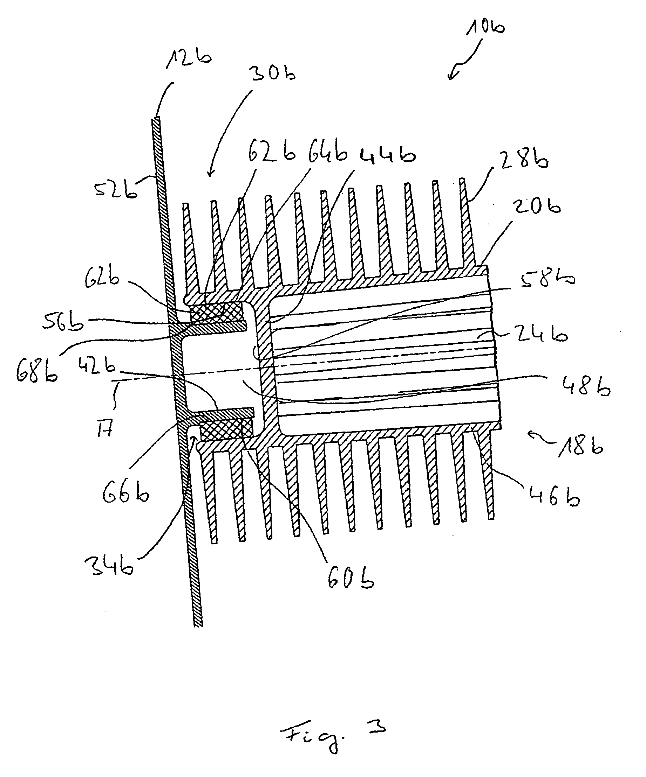

Eine weitere Ausgestaltungsvariante ist in Fig. 3 dargestellt. Auch hier sind gleiche Systembereiche mit dem gleichen Bezugszeichen, jedoch unter Hinzufügung des Anhangs "b" bezeichnet.

Ähnlich wie bei der Ausgestaltungsform in Fig. 2 ist auch bei der in Fig. 3 gezeigten Variante die Umfangswandung 46b des Wärmetauscherkörpers 20b über den axialen Bereich der Bodenwandung 44b hinaus verlängert, so dass die Umfangswandung 46b mit den daran vorgesehenen Wärmeübertragungsrippen 28b wiederum nur in geringem Abstand von der Gehäusewandung 52 endet. Der erste Lagerungsbereich 30b umfasst hier die Lagerungsaussparung 48b, die nach außen hin, also in Umfangsrichtung, im Wesentlichen durch die Umfangswandung 46b und die daran vorgesehene Innenoberfläche 56b begrenzt ist. In axialer Richtung bildet die Bodenwandung 44b des Wärmetauscherkörpers 20b den Bodenbereich der Lagerungsaussparung 48b. In diese Lagerungsaussparung 48b greift der nunmehr am ersten Gegen-Lagerungsbereich 34b vorgesehene Lagerungsvorsprung 42b ein, wobei auch hier das elastische erste Lagerungselement 62b zwischen der am Lagerungsvorsprung 42b vorgesehenen Außenoberfläche 60b und der Innenoberfläche 56b am Wärmetauscherkörper 20b liegt.

Man erkennt, dass in der dargestellten Ausgestaltungsform nunmehr der erste Gegen-Lagerungsbereich 34b einen integralen Bestandteil der Gehäusewandung 52b des Luftführungsgehäuses 12b bildet. Beispielsweise kann er als ringartiger, näherungsweise zylindrischer und axial von der Gehäusewandung 52b abstehender Vorsprung ausgebildet sein. Dieser Lagerungsvorsprung 42b weist wiederum die Schulter bzw. den Anlagebereich 68b auf, um die axiale Lage des ersten Lagerungselements 62b definiert vorgeben zu können. Ebenso wie bei der beispielsweise in Fig. 1 dargestellten Variante können hier die einander im Wesentlichen radial gegenüber liegenden Flächen 56b und 60b sich verjüngend ausgestaltet sein, was bei ggf. entsprechend konischer bzw. sich verjüngender Ausgestaltung des Lagerungselements 62b den Vorgang des axialen Ineinandereinführens und das Erzielen einer definierten Einspannwirkung erleichtert.

Ein Vorteil dieser Ausgestaltungsform beispielsweise im Vergleich zu der in Fig. 2 gezeigten Ausgestaltungsform ist, dass der Wärmetauscherkörper 20b eine geringere Masse aufweist. Dadurch lässt sich in der Startphase die Betriebstemperatur des Wärmetauscherkörpers 20b schneller einstellen. Weiterhin kann sichergestellt werden, dass ein geringerer Teil an Wärmeenergie in Bereiche geleitet wird, die nicht zur Erwärmung von in einem Fahrzeuginnenraum zu leitender Luft aktiv sind, während ein größerer Teil der eingesetzten Wärmeenergie tatsächlich in den Bereich der Wärmeübertragungsrippen 28b fließt.

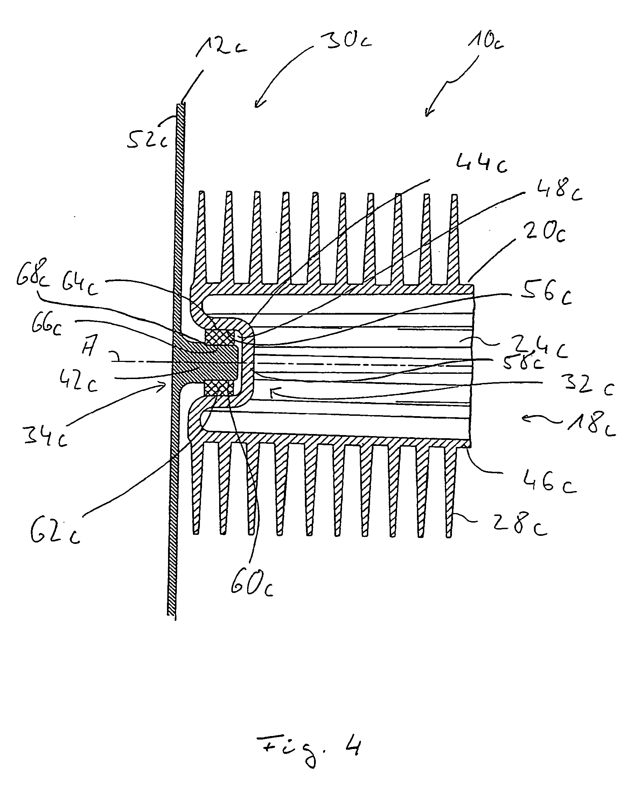

Eine weitere Variante der erfindungsgemäßen Einrichtung ist in Fig. 4 gezeigt. Komponenten, die hinsichtlich Aufbau bzw. Funktion vorangehend beschriebenen Komponenten entsprechen, sind mit dem gleichen Bezugszeichen unter Hinzufügung eines Anhangs "c" bezeichnet.

Auch bei der in Fig. 4 dargestellten Variante ist der Lagerungsvorsprung 42c am ersten Gegen-Lagerungsbereich 34c vorgesehen und bildet einen integralen Bestandteil der Gehäusewandung 52c. Hier ist dieser Lagerungsvorsprung 42c als massiver Lagerungszapfen ausgebildet. Es sei darauf hingewiesen, dass sowohl bei der in Fig. 4 dargestellten Ausgestaltungsvariante als auch bei der in Fig. 3 dargestellten Ausgestaltungsvariante der erste Gegen-Lagerungsbereich selbstverständlich auch an einem separaten, an der jeweiligen Gehäusewandung festzulegenden Bauteil ausgebildet sein könnte. In entsprechender Weise könnte selbstverständlich bei den in den Fig. 1 und 2 gezeigten Varianten der erste Gegen-Lagerungsbereich einen integralen Bestandteil der Gehäusewandung bilden.

Der Bodenbereich 44c des Wärmetauscherkörpers 20c ist hier mit einer axialen Einsenkung ausgebildet, die die Lagerungsaussparung 48c mit ihrer Innenoberfläche 56c bereitstellt. Da dieser Bereich der Bodenwandung 44c also in den von der Umfangswandung 46c des Wärmetauscherkörpers 20c umgebenden Bereich eintaucht, ist auch hier dafür gesorgt, dass die die Wärmeübertragungsrippen 28c tragende Umfangswandung 46c wieder bis nahe an die Gehäusewandung 52c des Luftführungsgehäuses 12c heranreicht und dabei den ersten Lagerungsbereich 32c, d.h. hier die Lagerungsaussparung 48c, umgibt.

Das erste Lagerungselement 62c ist axial durch den Anlagebereich 68c am ersten Gegen-Lagerungsbereich 34c, d.h. hier an dem Lagerungsvorsprung 42c, axial abgestützt. Um das Einführen wieder zu erleichtern bzw. die gewünschte Einspannwirkung erlangen zu können, kann der Lagerungsvorsprung 42c mit seiner Außenoberfläche 60c wieder in Richtung auf sein Ende zu sich verjüngend ausgebildet sein, wobei entsprechend auch die Lagerungsaussparung 48c mit ihrer Innenumfangsoberfläche 56c sich zum Bodenbereich 58c, der hier einen Teilabschnitt der Bodenwandung 44c bildet, verjüngen, Ist auch das erste Lagerungselement 60c mit sich entsprechend verjüngenden Lagerungsflächen 64c, 66c ausgebildet bzw. beispielsweise nach dem Aufschieben auf den Lagerungsvorsprung 42c in eine entsprechende Form gebracht, so wird der vorangehend beschriebene Effekt der leichteren Einführbarkeit erlangt.

Ein weiterer Vorteil der in Fig. 4 dargestellten Variante ist, dass bei sehr großer Oberfläche der Umfangswandung 46c des Wärmetauscherkörpers 20c durch die nach innen eintauchende Bodenwandung 44c die Gesamtinnenoberfläche des Wärmetauscherkörpers 20c vergrößert wird und somit ein verbessertes Wärmeaufnahmevermögen bereitstellt.

## Patentansprüche

1. Einrichtung zum Konditionieren von in einen Fahrzeuginnenraum einzuleitender Luft, umfassend ein Luftführungsgehäuse (12; 12a; 12b; 12c) und ein Heizgerät (14) mit einer Brenneranordnung (16) und einer Wärmetauscheranordnung (18, 18a; 18b; 18c), wobei die Wärmetauscheranordnung (18; 18a; 18b; 18c) einen langgestreckten, in dem Luftführungsgehäuse sich im Wesentlichen quer zur Luftströmungsrichtung erstreckenden Wärmetauscherkörper (20; 20a; 20b; 20c) aufweist, wobei der Wärmetauscherkörper (20; 20a; 20b; 20c) in seinem von der Brenneranordnung (16) entfernt liegenden ersten Endbereich (30; 30a; 30b; 30c) einen ersten Lagerungsbereich (32; 32a; 32b; 32c) aufweist, wobei an einer Gehäusewandung (52; 52a; 52b; 52c) des Luftführungsgehäuses (12; 12a; 12b; 12c) ein erster Gegen-Lagerungsbereich (34; 34a; 34b; 34c) vorgesehen ist **dadurch gekennzeichnet, dass** der Wärmetauscherkörper (20; 20a; 20b; 20c) mit seinem ersten Lagerungsbereich (32; 32a; 32b; 32c) vermittels eines ersten Lagerungselements (62; 62a; 62b; 62c) in einer eine Relativbewegung bezüglich des ersten Gegen-Lagerungsbereichs (34; 34a; 34b; 34c) in Richtung der Längserstreckung des Wärmetauscherkörpers (20; 20a; 20b; 20c) zulassenden Weise an dem ersten Gegen-Lagerungsbereich (34; 34a; 34b; 34c) abgestützt ist.

2. Einrichtung nach Anspruch 1,
**dadurch gekennzeichnet, dass** das erste Lagerungselement (62; 62a; 62b; 62c) elastisch ist und eine am ersten Lagerungsbereich (32; 32a; 32b; 32c) abgestützte erste Lagerungsfläche (66; 66a; 64b; 64c) sowie eine am ersten Gegen-Lagerungsbereich (34; 34a; 34b; 34c)abgestützte zweite Lagerungsfläche (64; 64a; 66b; 66c) aufweist.

3. Einrichtung nach Anspruch 1 oder 2,
**dadurch gekennzeichnet, dass** ein Lagerungsbereich (34; 34a; 32b; 32c) von erstem Lagerungsbereich (32; 32a; 32b; 32c) und zweitem Lagerungsbereich (34; 34a; 34b; 34c) eine Lagerungsaussparung (48; 48a; 48b; 48c) aufweist, in welche der andere Lagerungsbereich (32; 32a; 34b; 34c) vom ersten Lagerungsbereich (32; 32a; 32b; 32c) und zweitem Lagerungsbereich (34; 34a; 34b; 34c) als Lagerungsvorsprung (42; 42a; 42b; 42c) eingreift.

4. Einrichtung nach Anspruch 2 und Anspruch 3,
**dadurch gekennzeichnet, dass** das erste Lagerungselement (62; 62a; 62b; 62c) im Wesentlichen ringartig ausgebildet ist und dass die dem einen Lagerungsbereich (34; 34a; 32b; 32c) zugeordnete Lagerungsfläche (64; 64a; 64; 64) von erster Lagerungsfläche (66; 66a; 64b; 64c) und zweiter Lagerungsfläche (64; 64a; 66b; 66c) eine Außenumfangsfläche ist und an einer Innenumfangsfläche (56; 56a; 56b; 56c) der Lagerungsaussparung (48; 48a; 48b; 48c) anliegt und dass die dem anderen Lagerungsbereich (32; 32a; 34b; 34c)zugeordnete Lagerungsfläche (66; 66a; 66b; 66c) von erster Lagerungsfläche (66; 66a; 64b; 64c) und zweiter Lagerungsfläche (64; 64a; 66b; 66c) eine Innenumfangsfläche ist und an einer Außenumfangsfläche (60; 60a; 60b; 60c) des Lagerungsvorsprungs (62; 62a; 62b; 62c) anliegt.

5. Einrichtung nach Anspruch 4,
**dadurch gekennzeichnet, dass** an dem ersten Lagerungsbereich (32; 32a; 32b; 32c) oder/und dem ersten Gegen-Lagerungsbereich (34; 34a; 34b; 34c) ein die Bewegung des ersten Lagerungselements (62; 62a; 62b; 62c) in Richtung der Längserstreckung des Wärmetauscherkörpers (20; 20a; 20b; 20c) begrenzender Anlagebereich (68; 68a; 68b; 68c) vorgesehen ist.

6. Einrichtung nach Anspruch 3, 4 oder 5,
**dadurch gekennzeichnet, dass** der Lagerungsvorsprung (42; 42a; 42b; 42c) in Richtung auf sein Ende zu sich verjüngend ausgebildet ist.

7. Einrichtung nach einem der Ansprüche 3 bis 6,
**dadurch gekennzeichnet, dass** die Lagerungsaussparung (48; 48a; 48b; 48c) in Richtung auf einen Aussparungboden (58; 58a; 58b; 58c) zu sich verjüngend ausgebildet ist.

8. Einrichtung nach einem der Ansprüche 3 bis 7,
**dadurch gekennzeichnet, dass** der Wärmetauscherkörper (20; 20a; 20c) in seinem ersten Endbereich (30; 30a; 30c) eine Bodenwandung (44; 44a; 44c) aufweist, an welcher der erste Lagerungsbereich (32; 32a; 32c) vorgesehen ist.

9. Einrichtung nach Anspruch 8,
**dadurch gekennzeichnet, dass** der erste Lagerungsbereich (32; 32a) den von der Bodenwandung (44; 44a) sich erstreckenden Lagerungsvorsprung (42; 42a) umfasst.

10. Einrichtung nach Anspruch 8,
**dadurch gekennzeichnet, dass** die Bodenwandung (44c) eine die Lagerungsaussparung (48c) bereitstellende Einsenkung aufweist.

11. Einrichtung nach Anspruch 8,
**dadurch gekennzeichnet, dass** an die Bodenwandung (44; 44a; 44c)eine Wärmeübertragungsrippen (28; 28a; 28c) tragende Umfangswandung (46; 46a; 46c) anschließt.

12. Einrichtung nach Anspruch 9 und Anspruch 11,
**dadurch gekennzeichnet, dass** die Umfangswandung (46a) sich über die Bodenwandung (44a) hinaus erstreckt und den Lagerungsvorsprung (42a) wenigstens in einem Teilbereich seiner Erstreckung umgibt.

13. Einrichtung nach Anspruch 12,
**dadurch gekennzeichnet, dass** die Umfangswandung (46a) sich über das Ende des Lagerungsvorsprungs (42a) hinaus erstreckt.

14. Einrichtung nach Anspruch 10 und Anspruch 11,
**dadurch gekennzeichnet, dass** die in der Bodenwandung (44c) vorgesehene Einsenkung von der Umfangswandung (46c) umgeben ist.

15. Einrichtung nach einem der Ansprüche 3 bis 7,
**dadurch gekennzeichnet, dass** der Wärmetauscherkörper (20b) eine Wärmeübertragungsrippen (28b) tragende Umfangswandung (46b) und in seinem ersten Endbereich (30b) eine an diese anschließende Bodenwandung (44b) aufweist, wobei die Umfangswandung (46b) zur Bereitstellung der Lagerungsaussparung (48b) sich in Richtung der Längserstreckung des Wärmetauscherkörpers (20b) über die Bodenwandung (44b) hinaus erstreckt.

16. Einrichtung nach einem der Ansprüche 1 bis 15,
**dadurch gekennzeichnet, dass** der Wärmetauscherkörper (20) in seinem der Brenneranordnung (16) nahe liegenden zweiten Endbereich (36) einen zweiten Lagerungsbereich (38) aufweist, der an einem zweiten Gegen-Lagerungsbereich (40) an einer Gehäusewandung (70) des Luftführungsgehäuses (12) vermittels eines zweiten Lagerungselements (72) in Richtung der Längserstreckung des Wärmetauscherkörpers (20) und quer dazu im Wesentlichen nicht bewegbar abgestützt ist.

17. Einrichtung nach Anspruch 16,
**dadurch gekennzeichnet, dass** das zweite Lagerungselement (72) elastisch ist.

## Claims

1. Device for conditioning air to be conducted into a vehicle interior space, comprising an air-guiding housing (12; 12a; 12b; 12c) and a heating unit (14) with a burner arrangement (16) and a heat-exchanger arrangement (18; 18a; 18b; 18c), with the heat-exchanger arrangement (18; 18a; 18b; 18c) having an elongate heat-exchanger body (20; 20a; 20b; 20c) which extends in the air-guiding housing substantially transversely with respect to the air flow direction, with the heat-exchanger body (20; 20a; 20b; 20c) having, in its first end region (30; 30a; 30b; 30c) which is situated remote from the burner arrangement (16), a first mounting region (32; 32a; 32b; 32c), with a first counterpart mounting region (34; 34a; 34b; 34c) being provided on a housing wall (52; 52a; 52b; 52c) of the air-guiding housing (12; 12a; 12b; 12c), **characterized in that** the heat-exchanger body (20; 20a; 20b; 20c) is supported with its first mounting region (32; 32a; 32b; 32c) on the first counterpart mounting region (34; 34a; 34b; 34c) by means of a first mounting element (62; 62a; 62b; 62c) in a manner which permits a movement relative to the first counterpart mounting region (34; 34a; 34b; 34c) in the direction of the longitudinal extent of the heat-exchanger body (20; 20a; 20b; 20c).

2. Device according to Claim 1,
**characterized in that** the first mounting element (62; 62a; 62b; 62c) is elastic and has a first mounting surface (66; 66a; 64b; 64c) which is supported on the first mounting region (32; 32a; 32b; 32c;) and a second mounting surface (64; 64a; 66b; 66c) which is supported on the first counterpart mounting region (34; 34a; 34b; 34c).

3. Device according to Claim 1 or 2, **characterized in that** a mounting region (34; 34a; 32b; 32c) of the first mounting region (32; 32a; 32b; 32c) and second mounting region (34; 34a; 34b; 34c) has a mounting cutout (48; 48a; 48b; 48c) into which the other mounting region (32; 32a; 34b; 34c) of the first mounting region (32; 32a; 32b; 32c) and second mounting region (34; 34a; 34b; 34c) engages as a mounting projection (42; 42a; 42b; 42c).

4. Device according to Claim 2 and Claim 3, **characterized in that** the first mounting element (62; 62a; 62b; 62c) is of substantially ringshaped design and **in that** the mounting surface (64; 64a; 64; 64), which is assigned to the one mounting region (34; 34a; 32b; 32c), of the first mounting surface (66; 66a; 64b; 64c) and second mounting surface (64; 64a; 66b; 66c) is an outer peripheral surface and bears against an inner peripheral surface (56; 56a; 56b; 56c) of the mounting cutout (48; 48a; 48b; 48c), and **in that** the mounting surface (66; 66a; 66b; 66c), which is assigned to the other mounting region (32; 32a; 34b; 34c), of the first mounting surface (66; 66a; 64b; 64c) and second mounting surface (64; 64a; 66b; 66c) is an inner peripheral surface and bears against an outer peripheral surface (60; 60a; 60b; 60c) of the mounting projection (62; 62a; 62b; 62c).

5. Device according to Claim 4,
**characterized in that** a stop region (68; 68a; 68b; 68c) which limits the movement of the first mounting element (62; 62a; 62b; 62c) in the direction of the longitudinal extent of the heat-exchanger body (20; 20a; 20b; 20c) is provided on the first mounting region (32; 32a; 32b; 32c) or/and on the first counterpart mounting region (34; 34a; 34b; 34c),

6. Device according to Claim 3, 4 or 5,
**characterized in that** the mounting projection (42; 42a; 42b; 42c) is designed so as to taper in the direction of its end.

7. Device according to one of Claims 3 to 6,
**characterized in that** the mounting cutout (48; 48a; 48b; 48c) is designed so as to taper in the direction of a cutout base (58; 58a; 58b; 58c).

8. Device according to one of Claims 3 to 7,
**characterized in that** the heat-exchanger body (20; 20a; 20c) has, in its first end region (30; 30a; 30c), a base wall (44; 44a; 44c) on which the first mounting region (32; 32a; 32c) is provided.

9. Device according to Claim 8,
**characterized in that** the first mounting region (32; 32a) comprises the mounting projection (42; 42a) which extends from the base wall (44; 44a).

10. Device according to Claim 8,
**characterized in that** the base wall (44c) has an indentation which provides the mounting cutout (48a).

11. Device according to Claim 8,
**characterized in that** a peripheral wall (46; 46a; 46c) which supports heat-exchanging fins (28; 28a; 28c) adjoins the base wall (44; 44a; 44c).

12. Device according to Claim 9 and Claim 11,
**characterized in that** the peripheral wall (46a) extends beyond the base wall (44a) and surrounds the mounting projection (42a) at least in a partial region of its extent.

13. Device according to Claim 12,
**characterized in that** the peripheral wall (46a) extends beyond the end of the mounting projection (42a).

14. Device according to Claim 10 and Claim 11,
**characterized in that** the indentation provided in the base wall (44c) is surrounded by the peripheral wall (46c).

15. Device according to one of Claims 3 to 7, **characterized in that** the heat-exchanger body (20b) has a peripheral wall (46b) which supports heat-exchanging fins (28b) and, in its first end region (30b), a base wall (44b) which adjoins said peripheral wall (46b), with the peripheral wall (46b) extending beyond the base wall (44b) in the direction of the longitudinal extent of the heat-exchanger body (20b) in order to provide the mounting cutout (48b).

16. Device according to one of Claims 1 to 15, **characterized in that** the heat-exchanger body (20) has, in its second end region (36) which is situated close to the burner arrangement (16), a second mounting arrangement (38) which is supported by means of a second mounting element (72) on a second counterpart mounting region (40) on a housing wall (70) of the air-guiding housing (12) so as to be substantially immovable in the direction of the longitudinal extent of the heat-exchanger body (20) and transversely with respect thereto.

17. Device according to Claim 16,
**characterized in that** the second mounting element (72) is elastic.

## Revendications

1. Appareil pour conditionner l'air à introduire dans l'habitacle d'un véhicule, comprenant un boîtier de guidage d'air (12 ; 12a ; 12b ; 12c) et un appareil de chauffage (14) avec un agencement à brûleur (16) et un agencement échangeur de chaleur (18 ; 18a ; 18b ; 18c), l'agencement échangeur de chaleur (18 ; 18a ; 18b ; 18c) comprenant un corps échangeur de chaleur (20 ; 20a ; 20b ; 20c) de forme allongée, qui s'étend dans le boîtier de guidage d'air sensiblement perpendiculairement à la direction d'écoulement de l'air, ledit corps échangeur de chaleur (20 ; 20a ; 20b ; 20c) présentant une première zone de montage (32 ; 32a ; 32b ; 32c) dans sa première région terminale (30 ; 30a ; 30b ; 30c) située en éloignement de l'agencement à brûleur (16), et il est prévu une première zone de montage antagoniste (34 ; 34a ; 34b ; 34c) sur une paroi (52 ; 52a ; 52b ; 52c) du boîtier de guidage d'air (12 ; 12a ; 12b ; 12c), **caractérisé en ce que** le corps échangeur de chaleur (20 ; 20a ; 20b ; 20c) est soutenu par sa première zone de montage (32 ; 32a, 32b ; 32c) sur la première zone de montage antagoniste (34 ; 34a ; 34b ; 34c) au moyen d'un premier élément de montage (62 ; 62a ; 62b ; 62c), d'une manière qui permet un mouvement relatif par rapport à la première zone de montage antagoniste (34 ; 34a ; 34b ; 34c) selon la direction longitudinale du corps échangeur de chaleur (20 ; 20a ; 20b ; 20c).

2. Appareil selon la revendication 1,
**caractérisé en ce que** le premier élément de montage (62 ; 62a ; 62b ; 62c) est élastique et comprend une première surface de montage (66 ; 66a ; 64b ; 64c) soutenue sur la première zone de montage (32 ; 32a ; 32b ; 32c), ainsi qu'une seconde surface de montage (64 ; 64a ; 66b ; 66c) soutenue sur la première zone de montage antagoniste (34 ; 34a ; 34b ; 34c).

3. Appareil selon la revendication 1 ou 2,
**caractérisé en ce qu'**une zone de montage (34 ; 34a ; 32b ; 32c) de la première zone de montage (32 ; 32a ; 32b ; 32c) et de la seconde zone de montage (34 ; 34a ; 34b ; 34c) comprend une échancrure de montage (48 ; 48a ; 48b ; 48c), dans laquelle s'engage l'autre zone de montage (32 ; 32a ; 34b ; 34c) de la première zone de montage (32 ; 32a ; 32b ; 32c) et de la seconde zone de montage (34 ; 34a ; 34b ; 34c) sous forme de saillie de montage (42 ; 42a ; 42b ; 42c).

4. Appareil selon la revendication 2 et 3,
**caractérisé en ce que** le premier élément de montage (62 ; 62a ; 62b ; 62c) est réalisé essentiellement en forme d'anneau, et **en ce que** la surface de montage (64 ; 64a, 64b ; 64c) associée à l'une des zones de montage (34 ; 34a ; 32b ; 32c) parmi la première surface de montage (66 ; 66a : 64b ; 64c) et la seconde surface de montage (64 ; 64a ; 66b ; 66c) est une surface périphérique extérieure et s'applique contre une surface périphérique intérieure (56 ; 56a ; 56b ; 56c) de l'échancrure de montage (48 ; 48a ; 48b ; 48c), et **en ce que** la surface de montage (66 ; 66a ; 66b ; 66c), associée à l'autre zone de montage (32 ; 32a ; 34b ; 34c) parmi la première surface de montage (66 ; 66a ; 64b ; 64c) et la seconde surface de montage (64 ; 64a ; 66b ; 66c) est une surface périphérique intérieure et s'applique contre une surface périphérique extérieure (60 ; 60a ; 60b ; 60c) de la saillie de montage (62 ; 62a ; 62b ; 62c).

5. Appareil selon la revendication 4,
**caractérisé en ce qu'**une zone d'appui (68 ; 68a ; 68b ; 68c), qui limite le mouvement du premier élément de montage (62 ; 62a ; 62b ; 62c) selon la direction longitudinale du corps échangeur de chaleur (20 ; 20a ; 20b ; 20c), est prévue sur la première zone de montage (32 ; 32a ; 32b ; 32c) et/ou sur la première zone de montage antagoniste (34 ; 34a ; 34b ; 34c).

6. Appareil selon la revendication 3, 4 ou 5,
**caractérisé en ce que** la saillie de montage (42 ; 42a ; 42b ; 42c) est réalisée en rétrécissement en direction de son extrémité.

7. Appareil selon l'une des revendications 3 à 6,
**caractérisé en ce que** l'échancrure de montage (48 ; 48a ; 48b ; 48c) est réalisée en rétrécissement en direction d'un fond (58 ; 58a ; 58b ; 58c) de l'échancrure.

8. Appareil selon l'une des revendications 3 à 7,
**caractérisé en ce que** le corps échangeur de chaleur (20 ; 20a ; 20c) présente, dans sa première zone terminale (30 ; 30a ; 30c), une paroi de fond (44 ; 44a ; 44c), sur laquelle est prévue la première zone de montage (32 ; 32a ; 32c).

9. Appareil selon la revendication 8,
**caractérisé en ce que** la première zone de montage (32 ; 32a) comprend la saillie de montage (42 ; 42a) qui s'étend depuis la paroi de fond (44 ; 44a).

10. Appareil selon la revendication 8,
**caractérisé en ce que** la paroi de fond (44c) présente un renfoncement qui constitue l'échancrure de montage (48c).

11. Appareil selon la revendication 8,
**caractérisé en ce qu'**une paroi périphérique (46 ; 46a ; 46c) qui porte des nervures de transfert de chaleur (28 ; 28a ; 28c) se raccorde à la paroi de fond (44 ; 44a ; 44c).

12. Appareil selon la revendication 9 et 11,
**caractérisé en ce que** la paroi périphérique (46a) s'étend au-delà de la paroi de fond (44a), et entoure la saillie de montage (42a) au moins dans une zone partielle de son extension.

13. Appareil selon la revendication 12,
**caractérisé en ce que** la paroi périphérique (46a) s'étend au-delà de l'extrémité de la saillie de montage (42a).

14. Appareil selon la revendication 10 et la revendication 11,
**caractérisé en ce que** le renfoncement prévu dans la paroi de fond (44c) est entouré par la paroi périphérique (46c).

15. Appareil selon l'une des revendications 3 à 7,
**caractérisé en ce que** le corps échangeur de chaleur (20b) comprend une paroi périphérique (46b) qui porte des nervures de transfert thermique (28b) et, dans sa première zone terminale (30b), une paroi de fond (44b) qui se raccorde à celle-ci, ladite paroi périphérique (46b) s'étendant au-delà de la paroi de fond (44b) selon la direction longitudinale du corps échangeur de chaleur (20b) pour réaliser l'échancrure de montage (48b).

16. Appareil selon l'une des revendications 1 à 15,
**caractérisé en ce que** le corps échangeur de chaleur (20) comporte, dans sa seconde région terminale (36) proche de l'agencement à brûleur (16), une seconde zone de montage (38) qui est soutenue sans possibilité de déplacement sur une seconde zone de montage antagoniste (40) sur une paroi (70) du boîtier de guidage d'air (12), au moyen d'un second élément de montage (72) selon la direction longitudinale du corps échangeur de chaleur (20) et perpendiculairement à celle-ci.

17. Appareil selon la revendication 16,
**caractérisé en ce que** le second élément de montage (72) est élastique.
